# EUROPEAN PATENT APPLICATION

(11) **EP 3 300 309 A1**
(43) Date of publication of application: **28.03.2018**
(21) Application number: 16190628.4
(22) Date of filing: 26.09.2016
(51) Int. Cl.: H04L 12/42, H04L 12/40

(54) **TEST ASSEMBLY FOR A DATA TRANSMISSION SYSTEM AND METHOD OF TESTING SAID SYSTEM**

(71) Applicant: Delphi Technologies, Inc., Troy, MI 48007 (US)
(72) Inventor: ZIOLKOWSKI, Grzegorz, 41-200 Sosnowiec (PL); MENDRALA, Michal, 38-440 Iwonicz (PL)
(74) Representative: Delphi France SAS

(57) **Abstract**

Test assembly for a data transmission system comprising a plurality of data transmission devices arranged within a ring network, said data transmission system being configured to transmit data signals in accordance with a predetermined protocol in one direction within the ring network, characterized in that said data transmission devices are connected to each other through a routing unit which controls the connection from each data transmission device to the others in view to allow different ring network configurations without disconnecting the data transmission devices from the routing unit.

A method of testing a data transmission system is also provided.

## Description

### TECHNICAL FIELD

The present invention relates generally to a test assembly for data transmission systems and to a method of testing said systems.

### BACKGROUND OF THE INVENTION

The present invention relates more particularly to data transmission systems using the communication protocol called Media Oriented Systems Transport (MOST) protocol in a ring configuration.

MOST is the de-facto standard for multimedia and infotainment networking in the automotive industry. Although its roots are in the automotive industry, MOST can be used for applications in other areas such as other transportation applications, security and industrial applications.

For example, a MOST 150 bus technology allows transferring large amounts of data (150-Mbps bandwidth). This bus uses Plastic Optical Fibers (POFs) as transmission medium, in combination with light emitting diodes (LEDs). Using POFs, data transmission devices are connected in a ring as nodes. Every node has one place in a specific order in the ring.

However, when it comes to testing data transmission systems with different ring network configuration, then it requires connecting, disconnecting, changing order of devices. These operations have to be done manually which prevents the testing operations to be fully automated.

### SUMMARY OF THE INVENTION

The present invention proposes to solve the above mentioned problem by providing a test assembly for a data transmission system comprising a plurality of data transmission devices arranged within a ring network, said data transmission system being configured to transmit data signals in accordance with a predetermined protocol in one direction within the ring network wherein said data transmission devices are connected to each other through a routing unit which controls the connection from each data transmission device to the others in view to allow different ring network configurations without disconnecting the data transmission devices from the routing unit.

According to other advantageous features of the present invention:
- the routing unit comprises a switch unit which is controllable to set the ring network configuration by defining which data transmission device is included in the ring network and by defining in which order the data transmission devices are included in the ring network;
- the routing unit comprises a plurality of transceivers, each data transmission device being connected to the switch unit through a transceiver;
- said transceivers are Fiber Optic Transceivers (FOTs) which are able to convert optical signal from the data transmission device into differential signal and to convert differential signal from the switch unit into optical signal;
- said differential signal is a Low Voltage Differential Signal (LVDS) and said switch unit is a LVDS type switch;
- said predetermined protocol for data transmission in the ring network is a Media Oriented Systems Transport (MOST) protocol;
- said test assembly comprises a control unit which is connected to the routing unit and which is configured to run automatically several tests with different ring network configurations.

The present invention also proposes a method of testing a plurality of ring network configurations for a data transmission system comprising a plurality of data transmission devices arranged within a ring network, said data transmission system being configured to transmit data signals in accordance with a predetermined protocol in one direction within the ring network, said method comprising the steps of:
a) connecting each data transmission device to a routing unit which is configurable to control the connection from each data transmission device to the others,
b) controlling the routing unit to set up the ring network according to a predetermined ring network configuration,
c) running a set of data transmission tests on the data transmission system in said predetermined ring network configuration,
d) extracting a set of results from said set of data transmission tests.

Preferably, steps b), c), d) are implemented several times successively with different predetermined ring network configurations. Step b) may include the step of:
b1) selecting several data transmission devices from said data transmission system to be included in the given ring network configuration while the remaining are excluded.

Preferably the method further comprises the step of:
e) programming several ring network configurations to be implemented through the routing unit.

### BRIEF DESCRIPTION OF THE DRAWINGS

The present invention is now described by way of example with reference to the accompanying drawings in which:
- figure 1 is a block diagram illustrating a test assembly for a data transmission system according to a preferred embodiment of the invention;
- figure 2 is a block diagram illustrating an example of MOST ring network including four data transmission devices;
- figure 3 is a block diagram similar to the one of figure 1 illustrating a first example of MOST ring network configuration;
- figure 4 is a block diagram similar to the one of figure 1 illustrating a second example of MOST ring network configuration.

### DESCRIPTION OF THE PREFERRED EMBODIMENTS

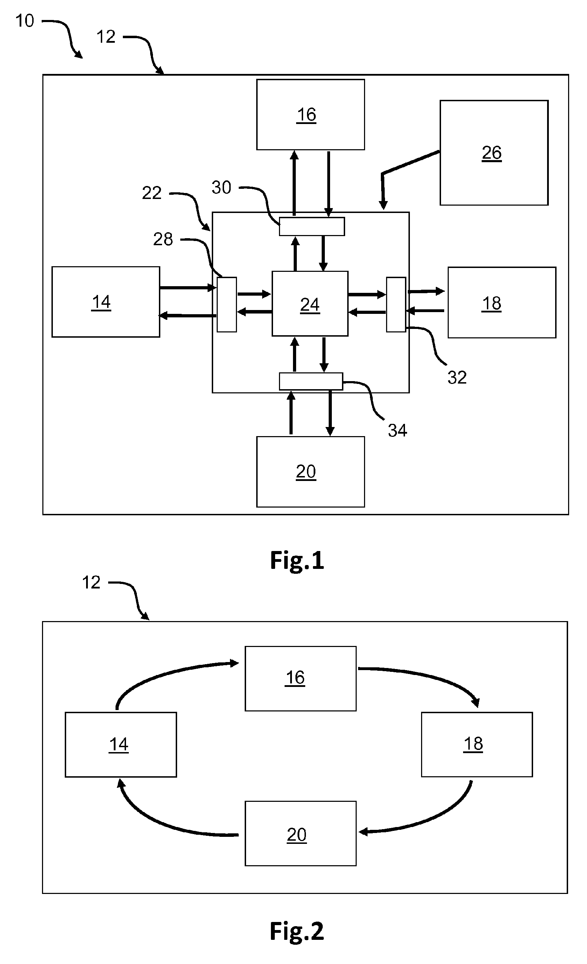

Hereinafter, a test assembly 10 for a data transmission system 12 according to an embodiment of the present invention will be described with reference to the figures. Figure 1 is a block diagram illustrating the overall structure of the test assembly 10 including the data transmission system 12 comprising a plurality of data transmission devices 14, 16, 18, 20

The data transmission system 12 adopts a ring topology as its physical topology, i.e., a plurality of nodes are connected in a ring topology forming a unidirectional ring-type Local Area Network (LAN). Hereinafter, with reference to figure 2, an exemplary data transmission system 12 will be described in which the data transmission devices 14, 16, 18, 20 function as nodes that are interconnected in a ring fashion via transmission lines, through which data is transmitted in one direction. Multimedia infotainment devices such as audio devices, navigation devices, information terminal devices, and the like are connected respectively to the data transmission devices 14, 16, 18, 20. Each of the multimedia devices performs a process using the data which has been transmitted across the data transmission system 12, and outputs a result of the processing back to the data transmission system 12. Note that, in terms of hardware construction, it is commonplace to integrate the data transmission devices 14, 16, 18, 20, and the multimedia devices into one unit.

According to the example shown in figure 2, Media Oriented Systems Transport (MOST) is used as an information communication protocol for the above data transmission system 12. Preferably the invention uses MOST 150 technology allowing transfer of large amounts of data: 150Mbps bandwidth According to MOST, data is transmitted on a frame-by-frame basis, such that frames are sequentially transmitted in one direction from data transmission devices 14, 16, 18, 20 to data transmission devices 14, 16, 18, 20. In other words, a first data transmission device 14 outputs data to the next, here the second, data transmission device 16 via a transmission line. In turn, the second data transmission device 16 outputs data to the next, here the third, data transmission device 18 via a transmission line. Similarly, each of the subsequent data transmission device 18, 20 outputs data to each next data transmission device by performing a similar operation to that performed by the second data transmission device 16 next to the first data transmission device 14. The data which is output from the last, here the fourth, data transmission device 20 is input to the first data transmission device 14. Preferably, to allow transfer of large amount of data, Plastic Optical Fibers (POFs) is used as the transmission lines with which the data transmission devices 14, 16, 18, 20 perform electrical communications with one another. When power to the data transmission system 12 is turned on, the first data transmission device 14 functions as a master device which transmits data in accordance with its own clock, whereas the other data transmission devices 16, 18, 20, function as slave devices which operate in synchronization with the clock generated by the master device.

In accordance with the teaching of the invention, as shown on figure 1, the data transmission devices 14, 16, 18, 20 are connected to each other through a routing unit 22 which controls the connection from each data transmission device 14, 16, 18, 20 to the others in view to allow different ring network configurations without need to disconnect the data transmission devices from the routing unit 22. Hence the test assembly 10 allows a ring configuration as shown on figure 2 wherein the data transmission devices 14, 16, 18, 20 are connected successively from the first 14 to the fourth 20. But it also allows to change the ring configuration, for example to change the order of the data transmission devices 14, 16, 18, 20, or to shunt one or several of the data transmission devices 14, 16, 18,20.

As illustrated by figure 1, the routing unit 22 preferably comprises a switch unit 24 which is controllable by a control unit 26 to set the ring network configuration. By controlling the switch unit 24 it is possible to define which data transmission device 14, 16, 18, 20 is included in the ring network and by defining in which order the data transmission devices 14, 16, 18, 20 are included in the ring network.

Preferably, the routing unit 22 comprises a plurality of transceivers 28, 30, 32, 34, each data transmission device 14, 16, 18, 20 being connected to the switch unit 22 through a transceiver 28, 30, 32, 34. Said transceivers 28, 30, 32, 34 are Fiber Optic Transceivers (FOTs) which are able to convert optical signal from the data transmission devices 14, 16, 18, 20 into differential signal and to convert differential signal from the switch unit 24 into optical signal. According to a preferred embodiment, said differential signal is a Low Voltage Differential Signal (LVDS) and said switch unit 24 is a LVDS type switch.

A Fiber Optic Transceiver is capable of data communication at a data rate of 150 Mbps through plastic optical fiber. Its transmitter is composed of a 650nm Resonant Cavity type Light Emitting Diode, which is suitable for POF communication, and a driver circuit that supports a LVDS interface. The receiver is composed of a PIN photodiode and signal processing circuit.

LVDS is a high speed (>155.5 Mbps), low power general purpose digital interface standard. This technology uses differential data transmission.

The routing unit 22 according to the invention acts as an automated configurator for MOST rings. The MOST optical signal from the data transmission devices is converted to electrical LVDS signal by the transceivers 28, 30, 32, 34. Every transceiver 28, 30, 32, 34 has a Fiber Optic Receiver and a Fiber Optic Transmitter. The LVDS signal is sent to the switch unit 24 which is preconfigured to define which input signal is set on which output signal. The non-blocking cross point LVDS switch unit 24 has on each output a driver with a multiplexer to allow any input to be routed to any output. The output signal from the switch unit 24 is sent to a transceiver 28, 30, 32, 34 where the electrical LVDS signal is converted to the MOST optical signal and sent to the connected data transmission device 14, 16, 18, 20.

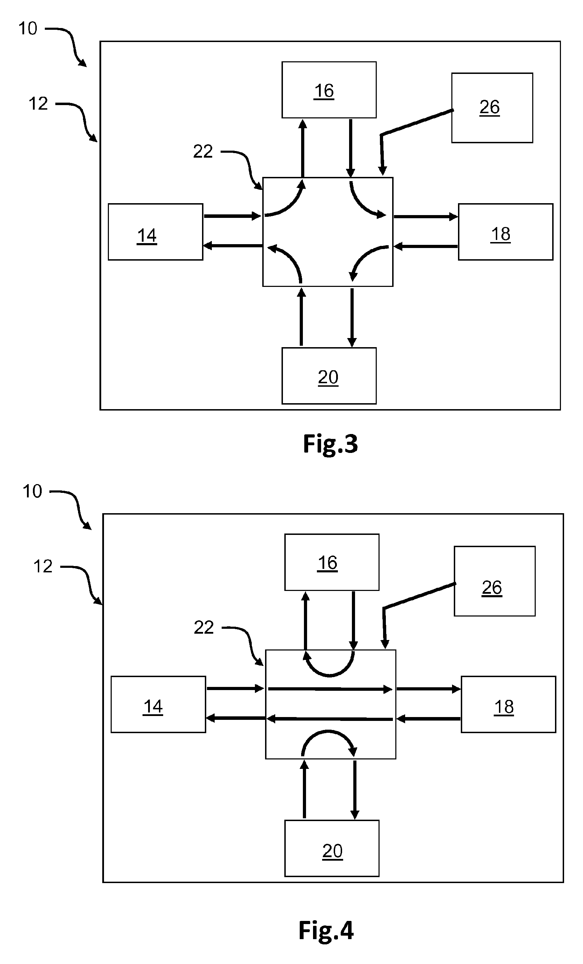

The control unit 26 is connected to the routing unit 22 and is configured to run automatically series of tests with different ring network configurations. For example, the control unit 26 will control the routing unit 22 and its switch unit 24 in order to set a first ring network configuration C1 for the data transmission system 12, illustrated by figure 3. In the first ring network configuration C1, the first data transmission device 14 is connected to the second data transmission device 16, which is connected to the third data transmission device 18, which is connected to the fourth data transmission device 20, which is connected to the first data transmission device 14. Such a configuration C1 corresponds to the ring network of figure 2. Series of tests are run on the data transmission system 12 in the first ring network configuration C1.

After these tests are completed, the control unit 26 automatically reconfigures the data transmission system 12 according to a second ring network configuration C1, illustrated by figure 4. In the second ring network configuration C2, the first data transmission device 14 is connected directly to the third data transmission device 18 while the remaining data transmission devices 16, 20 are removed from the ring network. Another series of tests are run on the data transmission system 12 in the second ring network configuration C2.

After these tests are completed, the control unit 26 can automatically reconfigures the data transmission system 12 according to other ring network configurations and run other series of tests on the data transmission system 12.

In the example shown, the data transmission system 12 only includes four data transmission devices 14, 16, 18, 20. Of course, according to alternative embodiments, it could include more data transmission devices allowing even more ring network configurations.

Thanks to the test assembly 10 of the invention, a method of testing a plurality of ring network configurations can be implemented. Said method comprises the steps of:
a) connecting each data transmission device 14, 16, 18, 20 to a routing unit 22 which is configurable to control the connection from each data transmission device 14, 16, 18, 20 to the others,
b) controlling the routing unit 22 to set up the ring network according to a predetermined first ring network configuration C1,
c) running a set of data transmission tests on the data transmission system 12 in said first ring network configuration C1,
d) extracting a set of results from said set of data transmission tests.

Steps b), c), d) are implemented several times successively with different predetermined ring network configurations C2, C3, C4...

Step b) preferably includes the step of:
b1) selecting several data transmission devices 14, 16, 18, 20 from said data transmission system 12 to be included in the given ring network configuration while the remaining data transmission devices are excluded.

Preferably, the method comprises the step of:
e) programming several ring network configurations C1, C2, C3, C4... to be implemented through the routing unit 22.

Step e) can be implemented through the control unit 26 in order to defines series of tests and various ring network configurations depending on the needs.

Thus the test assembly 10 and the method according to the invention allow using automated tests for different MOST ring configurations on one test bench.

## Claims

1. Test assembly (10) for a data transmission system (12) comprising a plurality of data transmission devices (14, 16, 18, 20) arranged within a ring network, said data transmission system (12) being configured to transmit data signals in accordance with a predetermined protocol in one direction within the ring network,
**characterized in that** said data transmission devices (14, 16, 18, 20) are connected to each other through a routing unit (22) which controls the connection from each data transmission device (14, 16, 18, 20) to the others in view to allow different ring network configurations without disconnecting the data transmission devices (14, 16, 18, 20) from the routing unit (22).

2. Test assembly (10) according to claim 1, **characterized in that** the routing unit (22) comprises a switch unit (24) which is controllable to set the ring network configuration by defining which data transmission device (14, 16, 18, 20) is included in the ring network and by defining in which order the data transmission devices (14, 16, 18, 20) are included in the ring network.

3. Test assembly (10) according to claim 2, **characterized in that** the routing unit (22) comprises a plurality of transceivers (28, 30, 32, 34), each data transmission device (14, 16, 18, 20) being connected to the switch unit (24) through a transceiver (28, 30, 32, 34).

4. Test assembly (10) according to claim 3, **characterized in that** said transceivers (28, 30, 32, 34) are Fiber Optic Transceivers (FOTs) which are able to convert optical signal from the data transmission device (14, 16, 18, 20) into differential signal and to convert differential signal from the switch unit (24) into optical signal.

5. Test assembly (10) according to claim 4, **characterized in that** said differential signal is a Low Voltage Differential Signal (LVDS) and **in that** said switch unit (24) is a LVDS type switch.

6. Test assembly (10) according to any one of the preceding claims, **characterized in that** said predetermined protocol for data transmission in the ring network is a Media Oriented Systems Transport (MOST) protocol.

7. Test assembly (10) according to any one of the preceding claims, **characterized by** comprising a control unit (26) which is connected to the routing unit (22) and which is configured to run automatically several tests with different ring network configurations.

8. Method of testing a plurality of ring network configurations for a data transmission system (12) comprising a plurality of data transmission devices (14, 16, 18, 20) arranged within a ring network, said data transmission system (12) being configured to transmit data signals in accordance with a predetermined protocol in one direction within the ring network, said method comprising the steps of:
a) connecting each data transmission device (14, 16, 18, 20) to a routing unit (22) which is configurable to control the connection from each data transmission device (14, 16, 18, 20) to the others,
b) controlling the routing unit (22) to set up the ring network according to a predetermined ring network configuration,
c) running a set of data transmission tests on the data transmission system (12) in said predetermined ring network configuration,
d) extracting a set of results from said set of data transmission tests.

9. Method according to claim 8 wherein steps b), c), d) are implemented several times successively with different predetermined ring network configurations.

10. Method according to claim 8 or 9 wherein step b) includes the step of:
b1) selecting several data transmission devices (14, 16, 18, 20) from said data transmission system (12) to be included in the given ring network configuration while the remaining are excluded.

11. Method according to any one of claims 8, 9, or 10, **characterized in that** it further comprises the step of:
e) programming several ring network configurations to be implemented through the routing unit (22).
